# EUROPEAN PATENT APPLICATION

(11) **EP 4 357 208 A1**
(43) Date of publication of application: **24.04.2024**
(21) Application number: 22425054.8
(22) Date of filing: 17.10.2022
(51) Int. Cl.: B60T 13/26, B60T 17/22, B60T 13/66, B61L 15/00

(54) **METHOD OF DETECTING ACCIDENTAL DECOUPLING OF A TRAIN AND DATA ACQUISITION UNIT**

(71) Applicant: Progress Rail Signaling S.p.A., 51034 Serravalle Pistoiese (Pistoia) (IT)
(72) Inventor: Azzali, Niccolò, Empoli (IT); Corrieri, Roberto, Pistoia (IT); Meoni, Alberto, 51037 Montale (IT); Santi, Alessandro, Pistoia (IT); Ricci, Andrea, 50124 Firenze (IT)
(74) Representative: Finch, Steven Caffall

(57) **Abstract**

The invention relates to a method of detecting accidental decoupling of a train and a data acquisition unit.

The data acquisition unit (20) is provided for use in detecting accidental decoupling of a train (1) having an air line (4) extending along a length of the train (1) to supply compressed air to a braking or other system of the train. The data acquisition unit (20) includes a body (21), and a sensor assembly (30) mounted on the body. The body (21) is connected in fluid communication with the air line (4). The sensor assembly (30) includes at least one static pressure sensor (31, 32) for sensing a static pressure in the air line (4), and at least one flow direction sensor (33, 34, 35) for sensing a direction of flow in the air line (4). The method includes: sensing static pressure in the air line (4); determining a change in static pressure; sensing a direction of flow in the air line (4); and, based on the change in static pressure and the direction of flow, identifying a loss of pressure indicative of decoupling. The data acquisition unit (20) may be installed at an end unit (2) of the train (1), so that a decoupling event can be identified by falling pressure accompanied by flow towards the opposite end of the train (1). The sensor assembly (30) may be mounted on a detachable part (23) of the data acquisition unit (20) for rapid overhaul and replacement in the event of a fault.

## Description

### Technical Field

This disclosure relates to systems for monitoring an air line, e.g. the brake air line extending along the length of a train, to detect loss of pressure indicative of accidental decoupling.

### Background

A train is a vehicle with multiple units coupled together in series to run along a track. Typically, these units include a locomotive arranged at the front of the train and hauling multiple carriages or wagons behind it. Typically, the braking system of the train is actuated by compressed air supplied along an air line that extends from the locomotive along the length of the train. Each portion of the air line forms a part of a respective unit of the train, the portions being coupled together in series relation between the units. In some systems two air lines may be arranged in parallel.

The compressed air may be stored in a tank on each unit of the train, which is used to supply the braking effort via the brake mechanism in that unit. Depending on the braking system, the brakes in each unit of the train may be applied responsive to an electrical signal, and/or responsive to a reduction in pressure in the air line or one of the air lines, in which case the driver may apply the brakes by opening an exhaust valve in the locomotive to cause the reduction in pressure.

An unexpected loss of pressure in the air line can be detected by a data acquisition device including one or more pressure sensors, for example, as taught by CN105946893 A. A loss of pressure may be indicative of a break in the air line, and so can be used to identify an accidental decoupling, which is to say, an unintended detachment of one or more of the units of the train from the remainder of the train.

Since the system for detecting accidental decoupling is a safety critical system, any component failure results in reduced availability of the rolling stock while the component is traced and replaced.

### Summary of the Disclosure

In a first aspect, the present disclosure provides a method of detecting accidental decoupling of a train, the train having an air line extending along a length of the train to supply compressed air to a system (e.g. a braking system) of the train. The method includes: sensing static pressure in the air line; determining a change in static pressure; sensing a direction of flow in the air line; and, based on the change in static pressure and the direction of flow, identifying a loss of pressure indicative of decoupling.

In a second aspect, the disclosure provides a data acquisition unit for use in detecting accidental decoupling of a train, the train having an air line extending along a length of the train to supply compressed air to a system (e.g. a braking system) of the train. The unit includes: a body, and a sensor assembly mounted on the body. The body is connectable in use in fluid communication with the air line. The sensor assembly includes: at least one static pressure sensor configured, in use, to sense a static pressure in the air line; and at least one flow direction sensor configured, in use, to sense a direction of flow in the air line.

In a related aspect, the disclosure provides an apparatus for detecting accidental decoupling of a train, the train having an air line extending along a length of the train to supply compressed air to a system (e.g. a braking system) of the train. The apparatus includes the data acquisition unit and at least one logic unit. The at least one logic unit is configured or configurable: to receive signals from the at least one pressure sensor and the at least one flow direction sensor; based on the signals, to determine a change in static pressure in the air line; and, based on the change in static pressure and the direction of flow, to identify a loss of pressure indicative of decoupling.

The at least one logic unit may be arranged to identify a loss of pressure indicative of decoupling based on a reduction in static pressure at an end unit of the train, only when the direction of flow is away from the end unit, and not when the direction of flow is towards the end unit.,

The apparatus including the data acquisition unit and the at least one logic unit may be incorporated in a train including: an end unit; a braking system; an air line extending from the end unit along a length of the train to supply compressed air to the braking system; an exhaust valve located in the end unit and operable to selectively exhaust air from the air line to cause a reduction in pressure in the air line; and a braking mechanism forming part of the braking system and operable responsive to said reduction in pressure.

### Brief Description of the Drawings

Further features and advantages will be apparent from the following illustrative embodiment which will now be described, purely by way of example and without limitation to the scope of the claims, and with reference to the accompanying drawings, in which:
Fig. 1 shows a train fitted with an apparatus in accordance with an embodiment of the disclosure.
Fig. 2 shows the data acquisition unit fitted to the air line in the locomotive, with the fixture portion partly cut away at II - II of Fig. 3 to show the flowpath.
Fig. 3 is an end view of the assembly of Fig. 2, with the fixture portion partly cut away at III - III of Fig. 2.
Fig. 4 shows the data acquisition unit as shown in Fig. 2, with the detachable portion detached from the fixture portion.
Fig. 5 is a flowchart illustrating an embodiment of the method of the disclosure.

Reference numerals and characters apppearing in more than one of the figures indicate the same or corresponding elements in each of them.

### Detailed Description

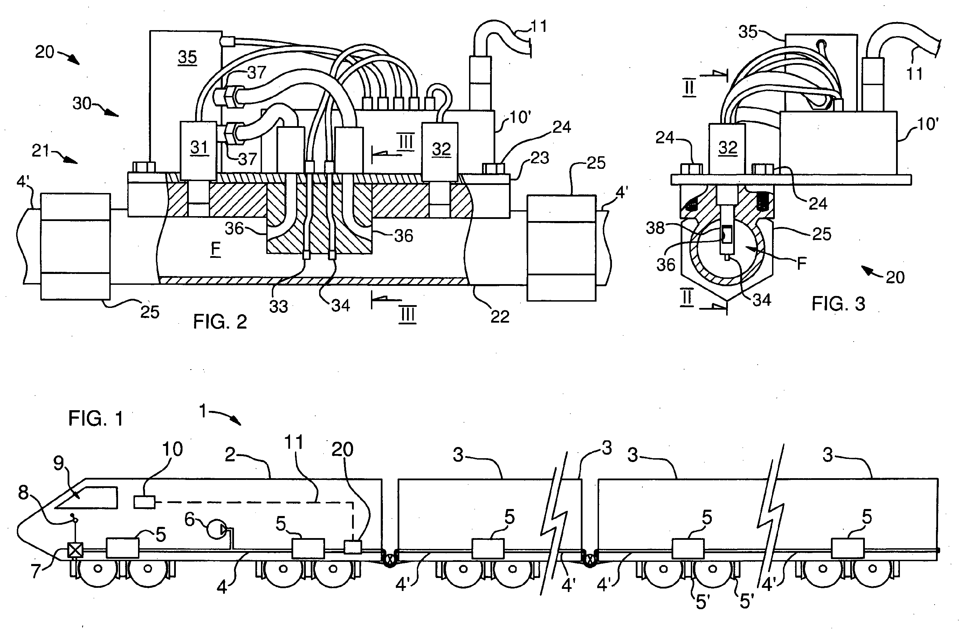

Referring to Fig. 1, in one possible arrangement, a train 1 includes a locomotive 2 forming its leading end unit and drawing behind it a series of units 3, e.g. carriages or wagons. All of the units 2, 3 are coupled together in series, and each unit 2, 3 includes a respective portion 4' of an air line 4 which extends along the length of the train to supply compressed air to the braking system of the train, the portions 4' being coupled together between each adjacent pair of units 2, 3. The braking system of the train includes a braking mechanism 5 in each unit 2, 3, which is operable to brake the wheels of the respective unit 2, 3 using the stored pressure of the compressed air supplied via the air line 4. The compressed air may be supplied to the air line 4 by a compressor 6 in the locomotive 2.

The locomotive 2 includes an exhaust valve 7 which is operable by the train driver from a braking control 8 in the cab 9 to depressurise the air line 4. The reduction in pressure actuates the braking mechanism 5 to apply the brakes 5' in each unit 2, 3.

The train 1 includes an apparatus for detecting accidental decoupling, including a data acquisition unit 20 and at least one logic unit 10, 10', which may be located at the data acquisition unit 20 and/or externally of the data acquisition unit 20, as further discussed below. In the illustrated embodiment, one logic unit 10 is configured as a separate module fitted in the locomotive 2 as shown, and in communication with the data acquisition unit 20 and with other systems of the train, such as a driver alarm system and an emergency braking system (not shown).

The data acquisition unit 20 may be arranged to sense the static pressure and the direction of flow at an end unit of the train, for example, a leading end unit such as a locomotive 2 as illustrated. In such arrangements, the loss of pressure indicative of decoupling may be identified, based on a reduction in static pressure, only when the direction of flow is away from the end unit 2, and not when the direction of flow is towards the end unit 2. In this way the logic unit 10 distinguishes between a braking event where air is exhausted, for example through the driver's exhaust valve 7, and a decoupling event that results in depressurisation via a broken air line 4 between two units 2, 3 of the train.

Referring now to Fig. 2, the data acquisition unit 20 includes a body 21, and a sensor assembly 30 mounted on the body. The body 21 is connected in use in fluid communication with the air line 4. The sensor assembly 30 includes at least one static pressure sensor 31, 32 configured, in use, to sense a static pressure in the air line 4, and at least one flow direction sensor 33, 34, 35 configured, in use, to sense a direction of flow in the air line 4.

The air line 4 defines a flowpath F extending along the length of the train 1. As illustrated, the at least one flow direction sensor 33, 34, 35 may be configured to extend, in use, into the flowpath F.

As illustrated, the body 21 may include a fixture portion 22 which is configured to be interposed (e.g. via suitable couplings 25), in use, in series relation between respective portions 4' of the air line 4 to define a portion of the flowpath F extending through the fixture portion 22. The at least one flow direction sensor 33, 34, 35 may be configured to extend, in use, into this portion of the flowpath F within the fixture portion.

Further as illustrated, the body 21 may include a detachable portion 23 which is mounted detachably on the fixture portion 22, e.g. by means of fixings 24. The at least one static pressure sensor 31, 32 and the at least one flow direction sensor 33, 34, 35 are mounted on the detachable portion 23. Thus, the sensor assembly 30 can be removed and replaced, simply be detaching the detachable portion 23 from the fixture portion 22.

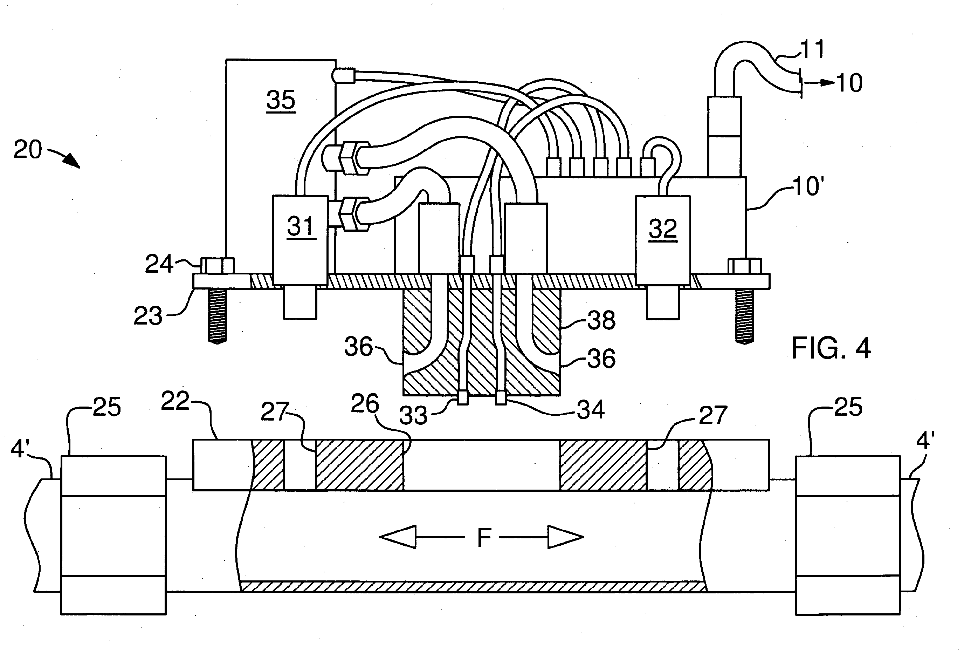

Conveniently as illustrated, the parts of the at least one flow direction sensor 33, 34, 35 that extend into the flowpath F may be arranged on a sensor support body 38 that extends into the flowpath F via an aperture 26 in the fixture portion 22 when the two parts 23, 22 of the body 21 are assembled together. As shown, the sensor support body 38 may extend part way into the flowpath F so that compressed air can flow around it on three sides (as illustrated, its narrow bottom side opposite the aperture 26 and its two larger, parallel sides perpendicular to the narrow side.) The sensor support body 38 may be configured as a plate with its length and breadth dimensions extending respectively, along the flowpath F, and away from the aperture 26 part way across the flowpath F, and its smallest, thickness dimension extending perpendicular to the flow direction, as shown. (The flow direction is indicated in Fig. 4 by the arrows of the flowpath F.)

By static pressure is meant the pressure of the air in the air line 4 as sensed by a sensor 31, 32 that is not configured to be affected by the kinetic energy of the flow. Static pressure may be defined for example on a standard scale, relative to ambient or to a nominal pressure value. Static pressure may be regarded as the pressure that would be sensed if the fluid were static, but the term does not imply that the fluid must be static while the pressure is measured; on the contrary, static pressure may be sensed while the fluid is flowing, simply by arranging the sensor to be insensitive to the flow direction. Thus, the static pressure sensor 31, 32 can be any conventional fluid pressure sensor connected in fluid communication with the flow path, but not being arranged to be affected by the kinetic energy of the flow.

In contrast, the kinetic energy of the flowing fluid may be used to detect the flow direction and optionally also (where static pressure, temperature, and/or density are known) the flow velocity or mass flow rate, by arranging for the flow to impinge on the sensor directly or via a Pitot tube, as exemplified by the flow direction sensor 35 of the illustrated embodiment which employs two Pitot tubes 36 facing in the two opposite directions of the flowpath F (the directions indicated by the double headed arrow in Fig. 4).

For redundancy, the data acquisition unit 20 may include at least two static pressure sensors 31, 32 or at least two flow direction sensors 33, 34, 35. The at least one logic unit 10, 10' may be arranged to receive and compare the signals from the at least two static pressure sensors 31, 32 or the at least two flow direction sensors 33, 34, 35, and to identify a sensor fault based on a difference between the compared signals. A fault signal may then be sent, for example, to a driver alarm system and/or automatic braking or other system of the train 1, to trigger maintenance of the system and/or braking or other adaptation of the functional status of the train 1. Redundant sensors may allow continued operation until a faulty sensor is replaced.

In the illustrated example, two static pressure sensors 31, 32, are are arranged on opposite sides of the sensor support body 38, although other arrangements are possible. The static pressure sensors 31, 32 are arranged in fluid communication with the flowpath F via apertures 27 in the fixture portion 22 of the body 21.

The example arrangement also includes three flow direction sensors: i) a first thermal flow direction sensor 33; (ii) a second thermal flow direction sensor 34; and iii) a kinetic energy based flow direction sensor 35 configured as a differential pressure sensor including a pair of Pitot tubes 36, facing in opposite directions of the flowpath F, each communicating with a respective port 37 of the differential pressure sensor 35.

As known in the art, each thermal flow direction sensor 33, 34 may include one or more circuit components that are heated, either by an electric current passing through the component, or indirectly by an adjacent circuit component, and cooled by the flow. Multiple components may be arranged in series along the flow direction, or various guiding arrangements may be used to direct the airflow over the components, so that they are heated or cooled at different rates depending on the flow direction. The components are connected in a circuit which determines the flow direction by detecting the difference, between the respective components, in a measured parameter (e.g. current, voltage drop, or resistance) that varies in dependence on the different rates of heating or cooling.

The stagnation or total pressure (dynamic + static pressure) at each Pitot tube 36 is sensed at the respective port 37 of the differential pressure sensor 35. The Pitot tubes 36 face in opposite directions along the flowpath F, so that the Pitot tube 36 facing against the flow is subjected to the dynamic pressure of the compressed air flow impinging upon it, and so a relatively higher stagnation pressure is applied to its respective port 37. The flow direction is determined based on the detected difference, determined by the differential pressure sensor 35, between the sensed stagnation pressures at its two respective ports 37.

The at least one logic unit 10, 10' is configured or configurable to receive signals from the at least one static pressure sensor 31, 32 and the at least one flow direction sensor 33, 34, 35; and, based on the signals, to determine a change in static pressure in the air line 4; and, based on the change in static pressure and the direction of flow, to identify a loss of pressure indicative of decoupling. (It will be understood that the direction of flow is forwards or backwards with respect to the length of the train 1 along the length direction of the flowpath F, as indicated in Fig. 4 by the double headed arrow.)

Optionally, the at least one logic unit 10, 10' may be arranged to identify a loss of pressure indicative of decoupling based on a reduction in static pressure at an end unit of the train (e.g. the leading end unit 2), only when the direction of flow is away from the end unit 2, and not when the direction of flow is towards the end unit 2.

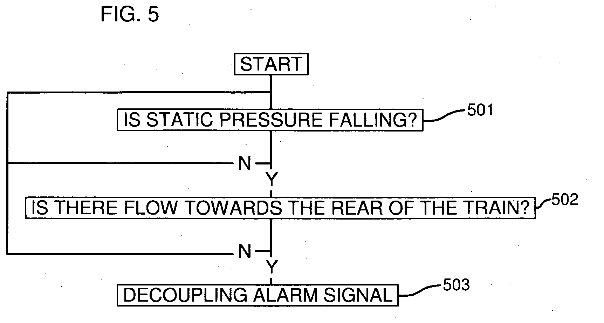

Referring now to Fig. 5, embodiments of the novel method include the following steps:
- sensing static pressure in the air line 4;
- determining a change in static pressure;
- sensing a direction of flow in the air line 4; and
- based on the change in static pressure and the direction of flow, identifying a loss of pressure indicative of decoupling.

In arrangements as illustrated, where the static pressure and the direction of flow are sensed at an end unit 2 of the train 1, the loss of pressure indicative of decoupling may be identified, based on a reduction in static pressure, only when the direction of flow is away from the end unit 2 (which is to say, from the end unit 2 towards the opposite end of the train 1), and not when the direction of flow is towards the end unit 2.

Fig. 5 illustrates one possible operational logical sequence whereby this method may be implemented in the arrangement of Fig. 1, where the end unit 2 is the leading end unit of the train 1.

At step 501, logic unit 10, 10' checks whether static pressure is falling, based on its internal clock and the signals received from static pressure sensors 31, 32 and stored in transient memory.

If no (N), the logic loops back to the start.

If yes (Y), then at step 502, logic unit 10, 10' checks whether there is flow towards the rear of the train 1, based on the signals received from the flow direction sensors 33, 34, 35.

If no (N), the logic loops back to the start.

If yes (Y), then at step 503, logic unit 10, 10' determines that a decoupling event has occurred and issues the decoupling alarm signal.

The sensors may sense the respective parameters continuously and iteratively, and the control logic may loop continuously and iteratively until the system is deactivated or step 503 is reached.

Alternative arrangements are possible; for example, steps 501 and 502 may be reversed.

### Industrial Applicability

In principle, it is possible to determine the flow direction in the air line 4 by comparing the instantaneous pressure detected at each of a plurality of static pressure sensors distributed at intervals along the length of the air line. In tests, however, it was found that this is only practical where the static pressure sensors are spaced apart by a large distance, for example, at least about 200m. Such arrangements therefore require an assembly of critical system components that are located in different, non-adjacent units of the train, together with means for transmitting signals over a substantial distance between the system components.

By providing one or more flow direction sensors 33, 34, 35 in combination with one or more static pressure sensors 31, 32, the novel data acquisition unit 20 makes it possible to identify a loss of pressure indicative of decoupling based on a single, compact sensor assembly 30, without the use of distributed sensors. Since the data acquisition unit 20 is fitted at an end unit (e.g. the leading end unit 2) of the train 1, and does not rely on distributed sensors along the length of the train 1, it can be accessed quickly in the event of a sensor failure. By further mounting the sensor assembly 30 on a detachable portion 23 that is detachably mounted on a fixture portion 22, this makes it possible to replace the sensor assembly 30 and other active components of a faulty data acquisition unit 20 with minimal downtime, irrespective of the length of the train 1. For maintenance purposes, a cover plate or plugs (not shown) may be provided, to be fitted to the fixture portion 22 in place of the detachable portion 23, to sealingly close the apertures 26, 27 in the fixture portion 22.

In summary, embodiments provide a data acquisition unit 20 for use in a method of detecting accidental decoupling of a train 1 having an air line 4 extending along a length of the train 1 to supply compressed air to a system, e.g. a braking system of the train. The data acquisition unit 20 includes a body 21, and a sensor assembly 30 mounted on the body. The body 21 is connected in fluid communication with the air line 4. The sensor assembly 30 includes at least one static pressure sensor 31, 32 for sensing a static pressure in the air line 4, and at least one flow direction sensor 33, 34, 35 for sensing a direction of flow in the air line 4. The method includes: sensing static pressure in the air line 4; determining a change in static pressure; sensing a direction of flow in the air line 4; and, based on the change in static pressure and the direction of flow, identifying a loss of pressure indicative of decoupling. The data acquisition unit 20 may be installed at an end unit 2 of the train 1, so that a decoupling event can be identified by falling pressure accompanied by flow towards the opposite end of the train 1. The sensor assembly 30 may be mounted on a detachable part 23 of the data acquisition unit 20 for rapid overhaul and replacement in the event of a fault.

As discussed above, Fig. 1 illustrates just one possible arrangement wherein the apparatus including the data acquisition unit 20 and at least one logic unit 10, 10' is incorporated in a train 1 including: an end unit 2; a braking system 7, 8, 5, 5'; an air line 4 extending from the end unit 2 along a length of the train 1 to supply compressed air to the braking system; an exhaust valve 7 located in the end unit 2 and operable to selectively exhaust air from the air line 4 to cause a reduction in pressure in the air line 4; and a braking mechanism 5, 5' forming part of the braking system and operable responsive to said reduction in pressure.

### Other arrangements are possible.

The novel apparatus 10, 10', 20 can be fitted in trains with different braking systems, irrespective of whether the brakes are applied by electric signals and/or by depressurisation of the air line 4. Where the brakes 5' are operable by depressurisation of the air line 4, the flow direction sensors 33, 34, 35 distinguish between braking events (causing air to flow towards the end unit 2 of the train 1) and decoupling events (causing air to flow away from the end unit 2 of the train 1 towards the break in the air line 4.) Thus, the novel apparatus 10, 10', 20 can be fitted also in braking systems that are operable purely by depressurisation of the air line 4 via a mechanical valve 7 in the end unit 2 of the train 1 that forms the driver's brake control 8, even where the control 8 does not generate any electrical signal indicative of braking.

In this specification, an end unit of the train is a unit located at or proximate the leading or trailing end of the train with respect to the direction of travel. The end unit may be the leading end unit, which typically will be the first unit of the train in the direction of travel. Typically, the end unit will be a locomotive 2, often with a cab 9 for the driver, as illustrated. A locomotive is a unit that propels the train, and may be purely for that purpose or may also accommodate passengers or goods. For example, some or all of the units of a multiple-unit train may be locomotives. Alternatively, one or more units may be located in front of the leading end unit or behind the trailing end unit as defined herein. For example, in some goods trains, a brake van may be located at the front or rear of the train, immediately in front of the leading end unit or immediately behind the trailing end unit as defined herein. In any case, as defined herein, the end unit may be defined as the unit where the data acquisition unit is fitted, and most if not all of the units of the train 1 will be arranged behind the leading end unit 2 (or in front of the trailing end unit) when considered in the direction of travel. An exhaust valve 7 may also be fitted in the end unit to actuate the brakes by depressurising the air line 4. The exhaust valve 7 may be controllable by the train driver, for example, from a cab 9 of the locomotive 2 forming the leading end unit, as illustrated.

Some trains may include a locomotive at each end, so that the train can be run in either direction. In such arrangements, two novel data acquisition units may be fitted, one in each locomotive. In this case, depending on the braking system, at least one logic unit may be arranged to respond to signals from both of the data acquisition units, or alternatively, from only the data acquisition unit at the front of the train and not the one at the rear of the train. This could be accomplished for example by selectively deactivating the rear-most data acquisition unit, or by selecting between the respective signals based on the direction of travel.

The air line 4 may be supplied with compressed air from a compressor 6 located in the end unit or elsewhere in the train, and either upstream or downstream of the data acquisition unit 20 with respect to the exhaust valve 7. The train may have one, two or more air lines extending along the length of the train. One or more such air lines may supply compressed air to the braking system, and another one or ones may supply compressed air to other systems of the train (e.g. door opening systems). The data acquisition unit may be fitted on any of the air lines to sense depressurisation of the air line. Advantageously, when fitted on an air line that is exhausted to apply the brakes, the flow direction sensor signal is used to distinguish between braking events and decoupling events. The same, or a modified operational logic, may be used also on air lines that do not supply the braking system, depending on the expected flow direction with respect to the data acquisition unit.

The data acquisition unit 20 may be fitted in an end unit of the train, for example, the leading end unit 2 as illustrated. Alternatively, the data acquisition unit 20 may be fitted elsewhere in the train.

The at least one logic unit 10, 10' embodies operational logic for interpreting the sensor signals and producing output signals responsive to the sensor signals. The at least one logic unit 10, 10' may receive other inputs, for example indicative of an operating condition of the train, and may interpret the sensor signals and the other inputs to generate its output signals in accordance with its operational logic. The output signals may include an alarm or a command to actuate an automatic braking system responsive to determining that a decoupling event has occurred. The at least one logic unit 10, 10' may communicate with other systems onboard or offboard the train 1, for example, to issue such alarm or command.

The at least one logic unit may include more than one unit in different locations and linked by a data communication path 11, which may be wired or wireless. As illustrated, one or more such logic units 10' may be located in the data acquisition unit 20, and one or more further such logic units 10 may be located away from the data acquisition unit 20. The units 10, 10' may have different tasks. For example, the data acquisition unit 20 may include a first logic unit 10' for receiving the signals from the sensors and sending an output signal to a second logic unit 10, which in turn communicates with other systems onboard or offboard the train, for example, to issue an alarm or actuate an automatic braking system responsive to an output signal from the first logic unit 10' indicative of a decoupling event.

One or more of the at least one logic unit 10, 10' may be configurable or reconfigurable to adapt the operational logic to suit different operational conditions or installation arrangements, for example, different braking systems or operating pressures or other system parameters, different air lines, or different locations along the length of the train.

The at least one logic unit 10, 10' may include a processor and a program stored in non-transient memory and running on the processor. In this case, the at least one logic unit 10, 10' may be configurable or reconfigurable by loading new software into the non-transient memory. Alternatively, the operational logic may be embodied in hardware, in which case the hardware may be configurable or reconfigurable (for example, by means of switches or jumpers or by interchangeable chips or other components.)

The data acquisition unit 20 and/or the logic unit 10, 10' may be configured to detect the sensed static pressure and to compare it with a threshold pressure value (for example, a value stored in memory). Alternatively or additionally, the data acquisition unit 20 and/or the logic unit 10, 10' may be configured also to sense the rate of flow (e.g. flow velocity or mass flow rate) in the flowpath F and to compare it with a threshold flow rate value (for example, a value stored in memory). The operational logic may be configured to produce output signals in dependence upon the results of such comparison.

For example, the operational logic may be adapted depending on the function and/or expected pressure range and/or the expected direction of flow in the air line 4 to which the data acquisition unit 20 is fitted, and/or the position in the train 1 at which the data acquisition unit 20 is installed.

For example, if installed in the middle of the train 1 on an air line 4 that can carry flow in both directions of the flowpath F in normal operation, but always above a set pressure threshold, the logic may be adapted to ignore the flow direction sensor output and to issue an alarm only responsive to a static pressure signal that is below a normal pressure value, or to a static pressure signal in combination with a flow rate signal above a threshold value, or sustained for more than a threshold time period - so, a sustained high flow rate and pressure falling below a threshold value would generate an alarm. Other possible adaptations will be evident to those skilled in the art.

In each case however, the presence of the at least one flow direction sensor 33, 34, 35 makes it possible to distinguish, based on the direction of flow in combination with the static pressure change, between expected depressurisation events and accidental decoupling events. Thus, the data acquisition unit 20 can be fitted, at an end unit 2 of the train 1, on the air line 4 that is exhausted to actuate the brakes 5', and also on other air lines, and in other positions, where the direction of flow is indicative of the cause of depressurisation.

Thus, the data acquisition unit 20 may be configured or configurable to sense a flow velocity or flow rate, wherein the at least one logic unit 10, 10' is further configured or configurable to compare the sensed flow velocity or flow rate with a stored value.

Alternatively or additionally, the at least one logic unit 10, 10' may be configured or configurable to compare the sensed static pressure with a stored value.

Alternatively or additionally, the at least one logic unit 10, 10' may be configured or configurable to sense a rate of change in any of the detected factors (e.g. a rate of change in flow direction or flow rate or velocity or reduction in static pressure), and/or to compare the time period over which the change occurs with a defined value stored in memory, and to modify its response dependent on the rate of change or the time period over which the change occurs.

By way of example, the at least one logic unit 10, 10' may be configured or configurable, e.g. by adapting its operational logic, to identify a loss of pressure indicative of decoupling based on any or all of the following:
- Based on the change in static pressure, optionally in combination with other factors (e.g. as mentioned below), and (by way of adaptation of its operational logic to suit a particular installation situation) not on the flow direction.
- Based on the change in static pressure in combination with the comparison of sensed static pressure with a stored value and/or in combination with the comparison of flow velocity or flow rate with a stored value.
- Based on the flow direction in combination with the comparison of flow velocity or flow rate with a stored value.
- Based on the rate of change of any sensed parameter or the time period over which the rate of change occurs.

Thus, for example, the logic unit 10, 10' may be configured or configurable to ignore a flow towards the rear of the train 1 if the flow rate or flow velocity is below a threshold value, and/or if the static pressure remains above a threshold value, and/or if the flow does not persist for more than a defined time period, wherein the combined parameters are indicative of gradual recharging of compressed air storage tanks or operation of actuators or other expected events, rather than a broken air line 4. (Here, to ignore means: to not identify a loss of pressure indicative of decoupling, hence to not issue an alarm, emergency braking command, or the like.)

. Similarly, the logic unit 10, 10' may be configured or configurable to ignore a flow towards the rear of the train 1 if it receives an input from another system of the train 1 indicative of an expected event, wherein the sensed parameters are consistent with the expected event. This can be determined for example based on parameter values stored in memory.

The static pressure sensors and flow direction sensors may be of any type as known in the art, including those having moving parts, for example, paddle wheel or moving vane type flow sensors, although for lower maintenance, those types without moving parts (e.g. as illustrated) may be preferred. Other parameters (e.g. temperature) may be sensed, or nominal reference values may be stored in memory.

Many further adaptations are possible within the scope of the claims.

In the claims, reference numerals and characters are provided in parentheses, purely for ease of reference, and should not be construed as limiting features.

### LIST OF ELEMENTS

- 1: Train
- 2: Locomotive, leading end unit
- 3: Units, carriages or wagons
- 4: Air line
- 4': Portion of air line
- 5: Braking mechanism
- 5': Brakes
- 6: Compressor
- 7: Exhaust valve
- 8: Braking control
- 9: Cab
- 10: Logic unit
- 10': Logic unit
- 20: Data acquisition unit
- 21: Body
- 22: Fixture portion of body
- 23: Detachable portion of body
- 24: Fixings
- 25: Couplings
- 26: Aperture
- 27: Aperture
- 30: Sensor assembly
- 31: Static pressure sensor
- 32: Static pressure sensor
- 33: First thermal flow direction sensor
- 34: Second thermal flow direction sensor
- 35: Kinetic energy based flow direction sensor (differential pressure sensor)
- 36: Pitot tube
- 37: Port
- 38: Sensor support body

- F: Flowpath

## Claims

1. A method of detecting accidental decoupling of a train (1), the train (1) having an air line (4) extending along a length of the train (1) to supply compressed air to a system (5, 5', 7, 8) of the train; the method including:
sensing static pressure in the air line (4);
determining a change in static pressure;
sensing a direction of flow in the air line (4); and
based on the change in static pressure and the direction of flow, identifying a loss of pressure indicative of decoupling.

2. A method according to claim 1, wherein the static pressure and the direction of flow are sensed at an end unit (2) of the train (1), and the loss of pressure indicative of decoupling is identified, based on a reduction in static pressure, only when the direction of flow is away from the end unit (2), and not when the direction of flow is towards the end unit (2).

3. A method according to claim 1, further including:
receiving signals from at least two static pressure sensors (31, 32) or at least two flow direction sensors (33, 34, 35); and
comparing the signals from the at least two static pressure sensors (31, 32) or the at least two flow direction sensors (33, 34, 35) to identify a sensor fault based on a difference between the compared signals.

4. A method according to claim 1, further including:
providing a data acquisition unit (20) including:
a body (21), and
a sensor assembly (30) mounted on the body (21), the sensor assembly (30) including at least one static pressure sensor (31, 32) for sensing a static pressure in the air line (4), and at least one flow direction sensor (33, 34, 35) for sensing the direction of flow in the air line (4); and
connecting the body (21) in fluid communication with the air line (4).

5. A method according to claim 4, wherein the airline (4) defines a flowpath (F) extending along the length of the train (1), the method further including:
arranging the at least one flow direction sensor (33, 34, 35) to extend into the flowpath (F).

6. A method according to claim 5, wherein the body (21) includes a fixture portion (22), the method further including:
interposing the fixture portion (22) in series relation between respective portions (4') of the air line (4) to define a portion of the flowpath (F) extending through the fixture portion (22); and
arranging the at least one flow direction sensor (33, 34, 35) to extend into said portion of the flowpath (F) within the fixture portion (22).

7. A method according to claim 6, wherein the body (21) includes a detachable portion (23), the method further including:
mounting the at least one static pressure sensor (31, 32) and the at least one flow direction sensor (33, 34, 35) on the detachable portion (23); and
mounting the detachable portion (23), detachably, on the fixture portion (22).

8. A data acquisition unit (20) for use in detecting accidental decoupling of a train (1), the train (1) having an air line (4) extending along a length of the train (1) to supply compressed air to a system (5, 5', 7, 8) of the train (1); the data acquisition unit (20) including:
a body (21), and
a sensor assembly (30) mounted on the body (21);
the body (21) being connectable in use in fluid communication with the air line (4);
the sensor assembly (30) including:
at least one static pressure sensor (31, 32) configured, in use, to sense a static pressure in the air line (4); and
at least one flow direction sensor (33, 34, 35) configured, in use, to sense a direction of flow in the air line (4).

9. A data acquisition unit (20) according to claim 8, wherein the air line (4) defines a flowpath (F) extending along the length of the train (1), and the at least one flow direction sensor (33, 34, 35) is configured to extend, in use, into the flowpath (F).

10. A data acquisition unit (20) according to claim 9, wherein the body (21) includes a fixture portion (22), the fixture portion (22) configured to be interposed, in use, in series relation between respective portions (4') of the air line (4) to define a portion of the flowpath (F) extending through the fixture portion (22); and the at least one flow direction sensor (33, 34, 35) is configured to extend, in use, into said portion of the flowpath (F) within the fixture portion (22).

11. A data acquisition unit (20) according to claim 10, wherein the body (21) includes a detachable portion (23); the at least one static pressure sensor (31, 32) and the at least one flow direction sensor (33, 34, 35) being mounted on the detachable portion (23); the detachable portion (23) being mounted detachably on the fixture portion (22).

12. An apparatus for detecting accidental decoupling of a train (1), the train (1) having an air line (4) extending along a length of the train (1) to supply compressed air to a system (5, 5', 7, 8) of the train (1); the apparatus including:
a data acquisition unit (20) according to any of claims 8 - 11; and
at least one logic unit (10, 10');
the at least one logic unit (10, 10') being configured or configurable:
to receive signals from the at least one static pressure sensor (31, 32) and the at least one flow direction sensor (33, 34, 35);
based on the signals, to determine a change in static pressure in the air line (4); and
based on the change in static pressure and the direction of flow, to identify a loss of pressure indicative of decoupling.

13. An apparatus (20, 10, 10') according to claim 12, wherein the at least one logic unit (10, 10') is arranged to identify a loss of pressure indicative of decoupling based on a reduction in static pressure at an end unit (2) of the train (1), only when the direction of flow is away from the end unit (2), and not when the direction of flow is towards the end unit (2).

14. An apparatus (20, 10, 10') according to claim 12, wherein the data acquisition unit (20) includes at least two static pressure sensors (31, 32) or at least two flow direction sensors (33, 34, 35); and the at least one logic unit (10, 10') is arranged to compare signals from the at least two static pressure sensors (31, 32) or the at least two flow direction sensors (33, 34, 35), and to identify a sensor fault based on a difference between the compared signals.

15. A train (1) including:
an end unit (2);
a braking system (5, 5', 7, 8);
an air line (4) extending from the end unit (2) along a length of the train (1) to supply compressed air to the braking system (5, 5', 7, 8);
an exhaust valve (7) located in the end unit (2) and operable to selectively exhaust air from the air line (4) to cause a reduction in pressure in the air line (4);
a braking mechanism (5, 5') forming part of said braking system (5, 5', 7, 8) and operable responsive to said reduction in pressure; and
an apparatus (20, 10, 10') according to claim 13.
